# EUROPÄISCHE PATENTANMELDUNG

(11) **EP 4 667 793 A1**
(43) Veröffentlichungstag der Anmeldung: **24.12.2025**
(21) Anmeldenummer: 25183589.8
(22) Anmeldetag: 18.06.2025
(51) Int. Cl.: F16K 7/12, F16K 17/40

(54) **MEMBRANVENTIL, VENTILMEMBRAN UND MEMBRANLAGE MIT TRENNABSCHNITT**

(30) Priorität: 20.06.2024 DE 102024117393
(71) Anmelder: GEMÜ Gebr. Müller Apparatebau GmbH & Co. Kommanditgesellschaft, 74653 Ingelfingen (DE)
(72) Erfinder: Klemt, Michael, 74629 Pfedelbach (DE); Meinikheim, Steffen, 74653 Ingelfingen (DE)
(74) Vertreter: DREISS Patentanwälte PartG mbB

(57) **Zusammenfassung**

Die Erfindung betrifft eine mehrlagige Ventilmembran (16) für ein Membranventil (10), die Ventilmembran (16) umfassend:
- eine medienberührende erste Membranlage (30), und
- eine auf einer Trockenseite der ersten Membranlage (30) angeordnete zweite Membranlage (32), wobei ein äußerer Verspannabschnitt (26) der zweiten Membranlage (32) und ein vom äußeren Verspannabschnitt (26) umgebener Funktionsabschnitt (28) der zweiten Membranlage (32) zumindest abschnittsweise beabstandet zueinander angeordnet sind.

## Beschreibung

Die Erfindung betrifft ein Membranventil, eine Ventilmembran und eine Membranlage einer Ventilmembran.

Im Betrieb eines Membranventils mit einer Ventilmembran kommt es in einem Bereich der Ventilmembran zu statischen Belastungen und in einem anderen Bereich der Ventilmembran zu dynamischen Belastungen. Die Ventilmembrane sind über die Bereiche hinweg durchgängig ausgebildet. Aufgrund der unterschiedlichen Belastungsbereiche kommt es zum Verschleiß und zu Ausfällen der Ventilmembran und damit auch des Membranventils insbesondere im Übergangsbereich zwischen diesen Bereichen.

Der Erfindung liegt folglich die Aufgabe zugrunde, die aus dem Stand der Technik bekannten Nachteile zu mindern oder zu beheben, insbesondere eine Ventilmembran bereitzustellen, welche langlebiger ausgebildet ist.

Die der Erfindung zugrundeliegende Aufgabe wird gelöst durch eine mehrlagige Ventilmembran für ein Membranventil mit den Merkmalen des Anspruchs 1. Die Ventilmembran umfasst eine medienberührende erste Membranlage und eine auf einer Trockenseite der ersten Membranlage angeordnete zweite Membranlage. Die zweite Membranlage umfasst einen Verspannabschnitt und einen vom Verspannabschnitt umgebenden Funktionsabschnitt, wobei insbesondere der Verspannabschnitt und der Funktionsabschnitt im Betrieb des Membranventils unterschiedlich belastet werden. Die zweite Membranlage ist vorzugsweise separat zur ersten Membranlage ausgebildet.

Der Verspannabschnitt und der Funktionsabschnitt der zweiten Membranlage sind zumindest abschnittsweise beabstandet zueinander angeordnet.

Eine derartige räumliche Trennung und/oder Entkopplung des Verspannabschnitts und des Funktionsabschnitts bewirkt, dass z.B. eine statische Belastung des Verspannabschnitts sich nicht oder sich weniger auf den Funktionsabschnitt und/oder eine dynamische Belastung des Funktionsabschnitts sich nicht oder sich weniger auf den Verspannabschnitt auswirkt. Demnach können die unterschiedlichen Lasten gezielt auf die unterschiedlichen Abschnitte der zweiten Membranlage verteilt werden. Zudem kann eine Reibung zwischen dem Verspannabschnitt und dem Funktionsabschnitt bei der Öffnungs- und Schließbewegung des Funktionsabschnitts verhindert bzw. vermindert werden.

Die beabstandete Anordnung des Verspannabschnitts und des Funktionsabschnitts kann in der zweiten Membranlage vorzugsweise mittels eines Trennabschnitts realisiert werden.

Es ist vorteilhaft, wenn der Trennabschnitt der zweiten Membranlage als wenigstens eine zumindest abschnittsweise ringförmige, also ringförmige oder teilringförmige, und/oder schlitzartige Ausnehmung ausgebildet ist. Die Ausnehmung kann sich entlang eines um die Stellachse angeordneten Kreises erstrecken. Die Ausnehmung erstreckt sich vorzugsweise über die gesamte Höhenerstreckung der zweiten Membranlage, wobei vorzugsweise die Höhenerstreckung parallel zur Stellachse verläuft. In dem Fall ist der Übergang zwischen der Verspannabschnitt und dem Funktionsabschnitt durch die Ausnehmung unterbrochen. In die Ausnehmung kann Material des Verspannabschnitts und/oder des Funktionsabschnitts verdrängt werden, sodass es auch bei einer elastischen und/oder plastischen Verformung, zumindest im Bereich der Ausnehmung, zu einem geringen oder gar keinem Kontakt zwischen der Verspannabschnitt und dem Funktionsabschnitt kommt. Demnach wird die Reibung verringert und das Auftreten von Verschleiß verzögert.

Alternativ kann der Trennabschnitt als wenigstens eine zumindest abschnittsweise ringförmige Perforation und/oder Oberflächenstrukturierung und/oder Materialverjüngung, insbesondere ein- oder zweiseitige Nut mit Nutboden, und/oder Materialschwächung ausgebildet sein. Dies führt ebenfalls zu einer Schwächung der Verbindung des Funktionsabschnitts und Verspannabschnitts. Der Trennabschnitt kann vorzugsweise als Filmscharnier ausgebildet sein. Der Trennabschnitt kann vorzugsweise derart ausgebildet sein, dass er im Betrieb als Sollbruchstelle ausgebildet ist. Demnach verbindet der Trennabschnitt den Funktionsabschnitt und den Verspannabschnitt im Montagezustand und reißt bzw. bricht dann bei Verlagerung des Funktionsabschnitts. Im Betriebszustand ist der Trennabschnitt dann durch einen zwischen dem Verspannabschnitt und dem Funktionsabschnitt verlaufenden Riss bzw. Bruch entlang der Sollbruchstelle ausgebildet.

Es ist ferner vorteilhaft, wenn der Verspannabschnitt und der Funktionsabschnitt der ersten Membranlage einteilig ausgebildet sind. Demnach sind der Verspannabschnitt und der Funktionsabschnitt der ersten Membranlage miteinander verbunden. In dem Fall ist der Übergang zwischen der Verspannabschnitt und dem Funktionsabschnitt durchgängig ausgebildet. Dies hat den Vorteil, dass die erste Membranlage die medienführende Durchgangsleitung des Membranventils abdichtet, insbesondere in Richtung der zweiten Membranlage und/oder des Antriebs.

Es ist vorteilhaft, wenn der Funktionsabschnitt wenigstens zwei Walkabschnitte und/oder wenigstens einen stegförmigen Dichtabschnitt aufweist. Der Dichtabschnitt kann vorzugsweise die wenigstens zwei Walkabschnitte voneinander trennen. Der Dichtabschnitt ist vorzugsweise zwischen einer Öffnungsstellung und einer Schließstellung bewegbar. In der Öffnungsstellung ist die Durchgangsleitung vorzugsweise geöffnet. In der Schließstellung drängt der Dichtabschnitt der zweiten Membranlage den Dichtabschnitt der ersten Membranlage gegen einen Ventilsitz, sodass der Dichtabschnitt der ersten Membranlage am Ventilsitz anliegt. In dem Fall ist die Durchgangsleitung vorteilhafterweise geschlossen. Bei der Öffnungs- und Schließbewegung vollziehen die Walkabschnitte vorzugsweise jeweils eine Walkbewegung. Demnach sind die Walkabschnitte und der Dichtabschnitt durch die Öffnungs- und Schließbewegung dynamisch belastet.

Es ist ferner vorteilhaft, wenn die erste Membranlage ebenfalls einen Verspannabschnitt und einen Funktionsabschnitt mit einem Dichtabschnitt und zwei Walkabschnitten aufweist.

Zur Vereinfachung der Montage können zwischen dem Verspannabschnitt und dem Funktionsabschnitt der zweiten Membranlage Verbindungsabschnitte zum Verbinden des Verspannabschnitts und des Funktionsabschnitts vorgesehen sein. Beim Einbau der zweiten Membranlage und/oder des Membranventils sind die relative Position des Verspannabschnitts und des Funktionsabschnitts der zweiten Membranlage demnach auch festgesetzt.

Es ist vorteilhaft, wenn wenigstens ein den Verspannabschnitt und den Funktionsabschnitt, insbesondere den Dichtabschnitt, verbindender erster Verbindungsabschnitt vorgesehen ist. Der erste Verbindungsabschnitt ist vorzugsweise in Verlängerung der Längserstreckung des Dichtabschnitts angeordnet. Es ist vorteilhaft, wenn zwei sich entlang der Längserstreckung des Dichtabschnitts gegenüberliegende erste Verbindungsabschnitte vorgesehen sind.

Wenn die Membranlage wenigstens einen Verbindungsabschnitt aufweist, dann ist die Ausnehmung vorzugsweise durch den wenigstens einen Verbindungsabschnitt unterbrochen und daher teilringförmig ausgebildet.

Es ist ferner vorteilhaft, wenn wenigstens ein den Verspannabschnitt und den Funktionsabschnitt, insbesondere den Walkabschnitt, verbindender zweiter Verbindungsabschnitt vorgesehen ist. Die Längserstreckung des zweiten Verbindungsabschnitts schließt vorzugsweise mit der Längserstreckung des Dichtabschnitts einen Winkel ein, welcher größer 0° und kleiner 180°, insbesondere zwischen 60° und 120° liegt, vorzugsweise 90° beträgt. Es ist vorteilhaft, wenn zwei, insbesondere sich gegenüberliegende, zweite Verbindungsabschnitte vorgesehen sind. Dabei verbindet ein zweiter Verbindungsabschnitt einen der beiden Walkabschnitte mit dem Verspannabschnitt und ein weiterer zweiter Verbindungsabschnitt verbindet den anderen der Walkabschnitte mit dem Verspannabschnitt.

Vorzugsweise sind die Verbindungsabschnitte, insbesondere der wenigstens eine erste Verbindungsabschnitt und/oder der wenigstens eine zweite Verbindungsabschnitt, als Sollbruchstelle ausgebildet. Demnach kann nach der Montage und/oder im Betrieb die Verbindungsabschnitte aufgebrochen werden, sodass die Verbindung zwischen dem Verspannabschnitt und dem Funktionsabschnitt irreversibel lösbar ist. Demnach wird zum einen die Montage erleichtert und zum anderen die Entkopplung des Verspannabschnitts und des Funktionsabschnitts realisiert. Die Sollbruchstelle kann z.B. durch eine Materialverjüngung, Perforierung, Bereitstellung eines bruchschwachen Materials oder sonstige die Bruchfestigkeit schwächende Behandlung erzielt werden.

Es ist vorteilhaft, wenn der Verspannabschnitt und der Funktionsabschnitt der zweiten Membranlage mittels der ersten Membranlage miteinander verbunden sind. In diesem Beispiel kann der gezeigte Verbindungsabschnitt entfallen. Der Verspannabschnitt und der Funktionsabschnitt der zweiten Membranlage sind jeweils beispielsweise mit der ersten Membranlage verklebt. Es ist alternativ denkbar, dass die erste Membranlage und die zweite Membranlage unverbunden aufeinander aufliegen.

Eine vorteilhafte Weiterbildung sieht vor, dass in der zweiten Membranlage ein Ausnehmungsstärke zwischen einer zumindest im Wesentlichen parallel zur Stellachse erstreckenden Verspanninnenfläche des Verspannabschnitts und einer zumindest im Wesentlichen parallel zur Stellachse erstreckenden Funktionsaußenfläche vorgesehen ist. Die Ausnehmungsstärke ist größer als 5 mm, insbesondere größer als 7 mm, vorzugsweise größer als 10 mm, und/oder kleiner als 20 mm, insbesondere kleiner als 17 mm, vorzugsweise kleiner als 15 mm, ausgebildet. Die Ausnehmungsstärke ist vorzugsweise derart ausgebildet, dass bei im Betrieb üblicher Verformung des Verspannabschnitts und/oder des Funktionsabschnitts Material in die Ausnehmung verdrängt werden kann, ohne dass es zu Kontakt zwischen dem statisch belasteten Verspannabschnitt und dem dynamisch belasteten Funktionsabschnitt kommt.

Die Ausnehmung ist vorzugsweise teil-/kreisringförmig und/oder die Funktionsaußenfläche verläuft vorzugsweise kreisförmig.

Aufgrund der Entkopplung des Verspannabschnitts und des Funktionsabschnitts der zweiten Membranlage sind die Abschnitte einfach aus unterschiedlichen Materialien herstellbar. Demnach kann der Verspannabschnitt der zweiten Membranlage aus einem ersten Material, insbesondere ein erster Ethylen-Propylen-Dien-Kautschuk (EPDM), hergestellt sein, und der Funktionsabschnitt aus einem vom ersten Material unterschiedlichen zweiten Material, insbesondere Fluorelastomer-Kautschuk (FKM), Hydrierter Acryl-Nitril-Butadien-Kautschuk (HNBR) und/oder ein zweiter EPDM, hergestellt sein. Dabei können die Walkabschnitte vorzugsweise aus einem dritten EPDM und/oder der Dichtabschnitt aus FKM und/oder HNBR hergestellt werden. Das erste EPDM und/oder das zweite EPDM und/oder das dritte EPDM können identisch ausgebildet sein.

Die Ventilmembran kann vorzugsweise eine dritte Membranlage umfassen. Vorzugsweise ist die zweite Membranlage entlang der Stellachse zwischen der ersten Membranlage und der dritten Membranlage angeordnet. Die dritte Membranlage kann als Rückenplatte ausgebildet sein. Die dritte Membranlage weist vorzugsweise einen Verspannabschnitt und/oder einen Funktionsabschnitt auf. Ferner können der Verspannabschnitt und der Funktionsabschnitt, entsprechend der zweiten Membranlage, beabstandet zueinander angeordnet sein und ferner vorzugsweise eine ringförmige oder teilringförmige Ausnehmung aufweisen.

Die der Erfindung zugrundeliegende Aufgabe wird ebenfalls durch ein Membranventil mit den Merkmalen des Anspruchs 13 gelöst. Das Membranventil umfasst eine medienführende Durchgangsleitung und eine zuvor beschriebene Ventilmembran zum Öffnen und Schließen der Durchgangsleitung.

Eine weitere vorteilhafte Weiterbildung sieht vor, dass der Funktionsabschnitt entlang einer Stellachse zwischen einer Öffnungsstellung und einer Schließstellung verlagerbar ist. Demnach ist der Funktionsabschnitt durch die Öffnungs- und Schließbewegung dynamisch belastet. Vorzugsweise sind die erste Membranlage und die zweite Membranlage und insbesondere die dritte Membranlage entlang der Stellachse angeordnet.

Eine vorteilhafte Weiterbildung sieht vor, dass das Membranventil ein Ventilkörper und ein am Ventilkörper angeordnetes Antriebsgehäuse aufweist, wobei der Verspannabschnitt zwischen dem Ventilkörper und dem Antriebsgehäuse, insbesondere statisch, verspannt ist. Dabei erstreckt sich der Verspannabschnitt vorzugsweise in einer Ebene senkrecht zur Stellachse. Im Sinne der Erfindung ist der Bereich des Membranventils und/oder der Membranlagen als Verspannabschnitt zu verstehen, welcher am Ventilkörper verspannt ist und daher trotz einer Öffnungs- und Schließbewegung der Ventilmembran sich nicht oder nicht signifikant bewegt. Folglich ist der Verspannabschnitt statisch belastet.

Eine weitere vorteilhafte Weiterbildung sieht vor, dass eine Antriebskraft eines Ventilantriebs des Membranventils über eine entlang der Stellachse erstreckende Antriebsstange und ein Druckstück in die Ventilmembran einleitbar ist. Die Ausnehmungsstärke ist vorzugsweise kleiner oder gleich dem in Bezug auf die Stellachse radialen Abstand einer Ventilkörperinnenfläche des Ventilkörpers und einer Druckstückaußenfläche des Druckstücks.

Vorzugsweise ist die erste Membranlage zwischen der Durchgangsleitung des Membranventils und der zweiten Membranlage angeordnet.

Die der Erfindung zugrundeliegende Aufgabe wird ebenfalls durch eine Membranlage einer Ventilmembran mit den Merkmalen des Anspruchs 16 gelöst. Die Membranlage weist einen Verspannabschnitt und einen vom Verspannabschnitt umgebenden Funktionsabschnitt auf, wobei der Verspannabschnitt und der Funktionsabschnitt zumindest abschnittsweise beabstandet zueinander angeordnet sind, wobei wenigstens ein den Verspannabschnitt und den Funktionsabschnitt verbindender Verbindungsabschnitt vorgesehen ist.

Weitere Einzelheiten und vorteilhafte Ausgestaltungen der Erfindung sind der nachfolgenden Beschreibung zu entnehmen, anhand derer Ausführungsbeispiele der Erfindung weiter beschrieben und erläutert sind.

Es zeigen:
- Fig. 1: eine schematische Draufsicht auf eine erste Ausführungsform einer zweiten Membranlage;
- Fig. 2: eine schematische Draufsicht auf eine zweite Ausführungsform einer zweiten Membranlage;
- Fig. 3: eine schematische Schnittansicht eines Membranventils mit einer zweiten Membranlage gemäß Fig. 1,
- Fig. 4 bis 6: eine schematische Detailansicht des Trennabschnitts der zweiten Membranlage in unterschiedlichen Ausführungsformen (Materialverjüngung, Perforation, Oberflächenstrukturierung), und
- Fig.7: eine schematische Draufsicht auf eine dritte Ausführungsform einer zweiten Membranlage, wobei die der Trennabschnitt gemäß Fig. 4b ausgebildet ist.

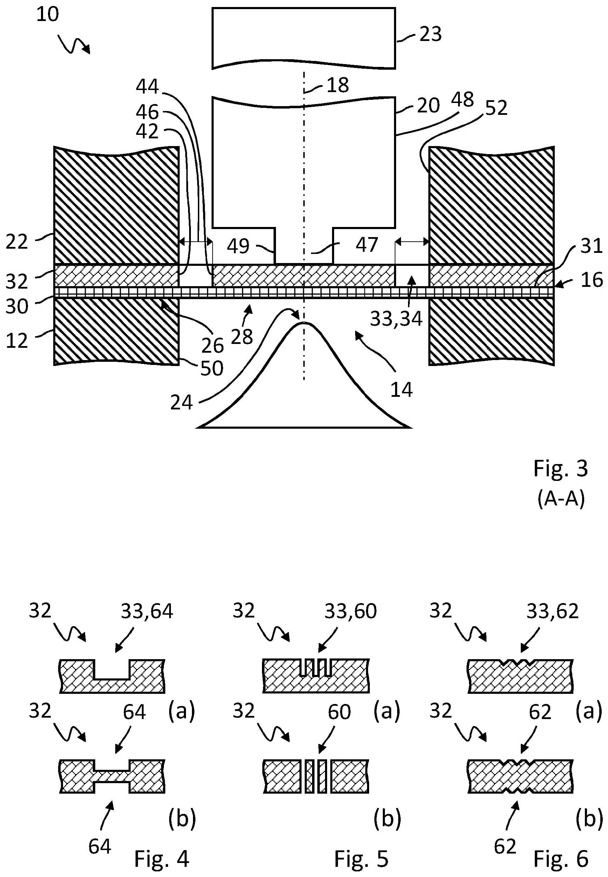

Gemäß Fig. 3 weist das Membranventil 10 ein Ventilkörper 12 und eine durch das Ventilkörper 12 umgebende, medienführende Durchgangsleitung 14 auf, welche mittels einer Ventilmembran 16 öffenbar und verschließbar ist. Die Ventilmembran 16 ist mittels einer entlang einer Stellachse 18 erstreckenden Antriebsstange 20 mit einem in einem Verspannbauteil 22 angeordneten, in Fig. 3 angedeuteten Antrieb 23 verbunden. Das Verspannbauteil 22 kann als den Antrieb aufnehmendes Antriebsgehäuse und/oder als Zwischengehäuse ausgebildet sein. Wenn ein Zwischengehäuse vorgesehen ist, dann ist dieses vorzugsweise zwischen dem Ventilkörper und dem Antriebsgehäuse angeordnet.

Mittels der Antriebsstange 20 ist die Ventilmembran 16 zwischen einer oberen Öffnungsstellung zum Öffnen der Durchgangsleitung 14 und einer unteren Schließstellung verlagerbar. In der Schließstellung drückt das Druckstück 47 die Ventilmembran 16 gegen einen in Fig. 3 ersichtlichen Ventilsitz 24.

Die Ventilmembran 16 weist einen Verspannabschnitt 26 auf, welcher zwischen dem Ventilkörper 12 und dem Verspannbauteil 22, insbesondere Antriebsgehäuse und/oder Zwischengehäuse, verspannt ist. Demnach wird der Verspannabschnitt 26 im Betrieb statisch belastet. Der Verspannabschnitt 26 liegt vorzugsweise in einer Ebene senkrecht zur Stellachse 18. Im Verspannabschnitt 26 sind vorzugsweise eine Vielzahl von Durchgangsbohrungen zur Aufnahme von nicht dargestellten Befestigungsmittel zum Befestigen des Antriebsgehäuses 22 am Ventilkörper 12 vorgesehen. Die Ventilmembran 16 weist ferner einen durch den Verspannabschnitt 26 umgebenen Funktionsabschnitt 28 auf. Der Funktionsabschnitt 28 bewegt sich beim Verlagern der Antriebsstange 20. Der Funktionsabschnitt 28 wird daher im Betrieb des Membranventils 10 dynamisch belastet.

Die Ventilmembran 16 ist gemäß Fig. 3 mehrlagig, insbesondere zweilagig, aufgebaut. Die Ventilmembran 16 weist eine erste Membranlage 30 und eine zweite Membranlage 32 auf.

Die erste Membranlage 30 ist im Betrieb der Durchgangsleitung zugewandt und daher medienberührend. Demnach ist es vorteilhaft, wenn die erste Membranlage 30 zur Abdichtung der Durchgangsleitung 14 gemäß Fig. 3 durchgängig, also lückenlos oder ausnehmungslos, ausgebildet ist.

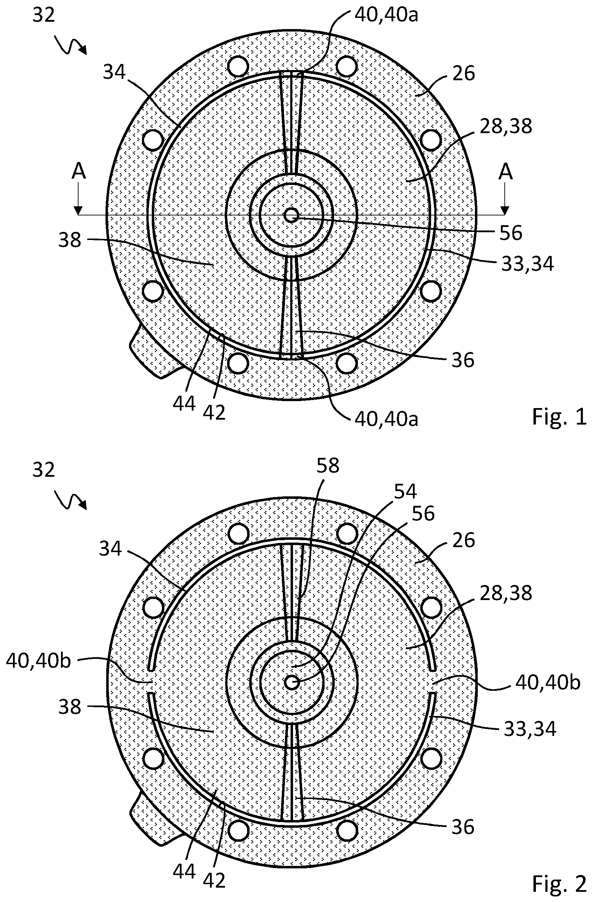

Die zweite Membranlage 32 ist im Betrieb der Durchgangsleitung 14 abgewandt. Die zweite Membranlage 32 ist auf einer Trockenseite 31 der ersten Membranlage 30 angeordnet. Demnach ist die erste Membranlage 30 zwischen der Durchgangsleitung 14 und der zweiten Membranlage 32 angeordnet. Da die zweite Membranlage 32 nicht medienberührend angeordnet ist, ist diese hinsichtlich der Langlebigkeit optimierbar. Dazu weist die zweite Membranlage 32 gemäß der Fig. 1 bis 3 einen Trennabschnitt 33, insbesondere zwei teilkreisförmige Ausnehmungen 34, auf. Zur Veranschaulichung ist der Trennabschnitt 33 in den Fig. 3 bis 7 in der Breite größer dargestellt.

Demnach ist der Verspannabschnitt 26 und der Funktionsabschnitt 28 der zweiten Membranlage 32 beabstandet zueinander angeordnet. Die erste Membranlage 30 ist gemäß Fig. 3 durchgängig bzw. einteilig ausgebildet, sodass der Verspannabschnitt 26 und der Funktionsabschnitt 28 sich kontaktieren.

Die Entkopplung des Verspannabschnitts 26 und des Funktionsabschnitts 28 der zweiten Membranlage 32 hat den Vorteil, dass die statische Belastung zum Festsetzen der Ventilmembran 16 durch den Verspannabschnitt 26 und die dynamische Belastung bei der Öffnungs- und Schließbewegung der Ventilmembran 16 durch den Funktionsabschnitt 28 aufgenommen wird. Ferner wird die Reibung des Verspannabschnitts 26 und des Funktionsabschnitts 28 vermindert, da diese sich durch die Ausnehmungen 34 nicht kontaktieren und nur noch geringfügig miteinander verbunden sind.

Alternativ kann der Trennabschnitt 33 gemäß Fig. 4, 5 und 6 auch als Materialschwächung, insbesondere Perforation 60, Oberflächenstrukturierung 62 oder Materialverjüngung 64, ausgebildet sein. In Fig. 4a ist an der Oberseite bzw. der der ersten Membranlage 30 abgewandten Seite der zweiten Membranlage eine Nut mit einem Nutboden vorgesehen. In Fig. 4b ist die Nut mit Nutboden beidseitig vorgesehen, insbesondere als Filmscharnier. In Fig. 5a ist an der Oberseite bzw. der der ersten Membranlage 30 abgewandten Seite der zweiten Membranlage 32 eine, insbesondere nadelförmige, Perforation 60 vorgesehen, welche sich nicht durch die gesamte zweite Membranlage 32 hindurch erstreckt. In Fig. 4b ist die, insbesondere nadelförmige, Perforation 60 durchgängig, also über die gesamte Höhenerstreckung der zweiten Membranlage 32, ausgebildet. In Fig. 6a ist an der Oberseite bzw. der der ersten Membranlage 30 abgewandten Seite der zweiten Membranlage 32 eine regelmäßige und/oder unregelmäßige Oberflächenstrukturierung 62 vorgesehen. In Fig. 6b ist die Oberflächenstrukturierung 62 beidseitig vorgesehen. Eine Kombination der gezeigten Materialschwächungen ist ebenfalls im Trennabschnitt, z.B. Materialverjüngung und/oder Oberflächenstrukturierung und/oder Perforation denkbar. In dem Fall ist Material zwischen dem Verspannabschnitt 26 und dem Funktionsabschnitt 28 vorgesehen. Jedoch ist dieser so ausgebildet, dass die Kopplung des Verspannabschnitts 26 und dem Funktionsabschnitts 28 vermindert ist. Ferner kann der Funktionsabschnitt 28 als Sollbruchstelle ausgebildet sein, sodass dieser im Betrieb des Membranventils 10, insbesondere durch die Bewegung des Funktionsabschnitts 28 entlang der Stellachse 18, reißt oder bricht. Demnach ist ein ähnlicher oder gleicher Effekt wie bei der Ausnehmung 34 erzielbar.

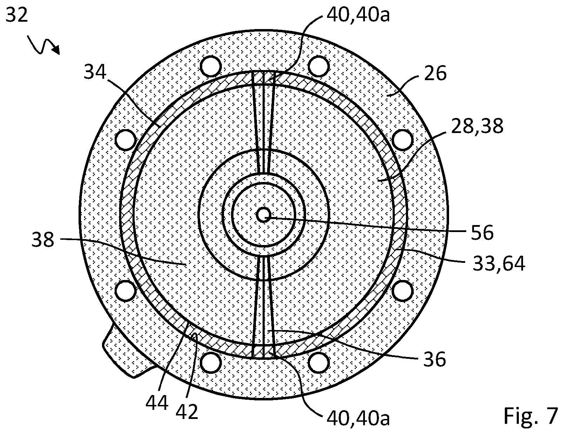

In Fig. 7 ist eine zweite Membranlage 32 mit einem Trennabschnitt 33 gemäß Fig. 4b gezeigt, wobei der Trennabschnitt 33 entlang des gesamten Umfangs der zweiten Membranlage 32 als beidseitige Materialverjüngung 64 ausgebildet. Demnach weist die zweite Membranlage 32 ein umlaufendes Filmscharnier auf. Alternativ ist der Trennabschnitt 33 in Fig. 7 gemäß einer der weiteren Ausführungsformen der Fig. 4a - 6b ausgebildet. Die besondere Ausbildung des Trennabschnitts 33 gemäß der Fig. 4a - 6b kann dabei über den gesamten Umfang oder abschnittsweise ausgebildet sein. Demnach kann in den nicht besonders ausgebildeten Bereichen eine Ausnehmung gemäß Fig. 1 oder Vollmaterial, wie in den anderen Bereichen 26, 28 der zweiten Materiallage, sein.

Der Funktionsabschnitt 28 weist einen stegförmigen Dichtabschnitt 36 und zwei Walkabschnitte 38 auf, wobei der Dichtabschnitt 36 die Walkabschnitte 38 voneinander trennt. Der Dichtabschnitt 36 der zweiten Membranlage 32 drängt den Dichtabschnitt 36 der ersten Membranlage 30 in Richtung des Ventilsitzes 24, sodass der Dichtabschnitt 36 der ersten Membranlage in der Schließstellung zur Anlage an den nicht dargestellten Ventilsitz kommt.

Der Dichtabschnitt 36 weist vorzugsweise einen ersten Stegabschnitt 54 sowie zwei dem Verspannabschnitt 26 zugewandte zweite Stegabschnitte 58 auf. Der Dichtabschnitt 36 weist vorzugsweise eine Durchgangsbohrung 56, insbesondere im Bereich des ersten Stegabschnitts 54 auf. Durch die Durchgangsbohrung 56 ist ein Pin des Membranschilds durchgeführt und in die Antriebsstange 20 eingehängt. Der Pin ist vorzugsweise in die Ventilmembran 16 eingearbeitet und dient zum Abziehen vom Ventilsitz 24.

Gemäß Fig. 1 und 2 weist die zweite Membranlage 32 Verbindungsabschnitte 40 auf, welche den Verspannabschnitt 26 und den Funktionsabschnitt 28 stegartig miteinander verbinden. Die Verbindungsabschnitte 40 unterbrechen die ringförmige Ausnehmung 34, sodass mehrere teilringförmige Ausnehmungen 34 vorgesehen sind. Es ist alternativ denkbar, dass nur eine ringförmige Ausnehmung 34 ohne Verbindungsabschnitte 40 vorgesehen ist.

Alternativ zu der gezeigten Ausführungsform ist die Ausnehmung 34 nicht durchgängig, sondern nutförmig ausgebildet. Ein weiteres Beispiel der Ausnehmung 34 umfasst eine ringförmige Perforierung oder Sollbruchstelle. Wenn eine Verbindung des Verspannabschnitts 26 und des Funktionsabschnitts 28 mittels des Trennabschnitts vorliegt, kann auf ein Verbindungsabschnitt 40 verzichtet werden.

In Fig. 1 und 2 sind zwei Anordnungen der Verbindungsabschnitte 40 dargestellt. In Fig. 1 sind zwei sich gegenüberliegende erste Verbindungsabschnitte 40a vorgesehen, welche in Verlängerung der Längserstreckung des Dichtabschnitts 36 angeordnet sind. Demnach verbinden die ersten Verbindungsabschnitte 40a beidseitig den Verspannabschnitt 26 und den Dichtabschnitt 36 der zweiten Membranlage 32.

In Fig. 2 sind zwei sich gegenüberliegende zweite Verbindungsabschnitte 40b vorgesehen, wobei die Längserstreckung der zweiten Verbindungsabschnitte 40b mit der Längserstreckung des Dichtabschnitts einen Winkel größer 0° und kleiner 180°, insbesondere zwischen 60° und 120°, vorzugsweise von 90°, einschließt. Demnach verbindet der linke zweite Verbindungsabschnitt 40b den linken Walkabschnitt 38 mit dem Verspannabschnitt 26 der zweiten Membranlage 32 und der rechte zweite Verbindungsabschnitt 40b den rechten Walkabschnitt 38 mit dem Verspannabschnitt 40b der zweiten Membranlage 32.

Es ist alternativ denkbar, dass mehrere, insbesondere zwei, erste Verbindungsabschnitte 40a und mehrere, insbesondere zwei, zweite Verbindungsabschnitte 40b in der zweiten Membranlage 32 vorgesehen sind. Vorzugsweise sind die Verbindungsabschnitte 40 paarweise einander gegenüberliegend angeordnet.

Die Verbindungsabschnitte 40 können als Sollbruchstellen ausgebildet sein. Demnach können nach der Montage und/oder im Betrieb die Verbindungsabschnitte 40 aufgebrochen werden, sodass die Verbindung zwischen dem Verspannabschnitt 26 und dem Funktionsabschnitt 28 irreversibel lösbar ist. Demnach wird zum einen die Montage erleichtert und zum anderen die Entkopplung des Verspannabschnitts 26 und des Funktionsabschnitts 28 realisiert. Die Sollbruchstelle kann z.B. durch eine Materialverjüngung, Perforierung, Bereitstellung eines bruchschwachen Materials oder sonstige die Bruchfestigkeit schwächende Behandlung erzielt werden. Dies ist auch auf den Trennabschnitt anwendbar.

Aufgrund der beabstandeten Anordnung des Verspannabschnitts 26 und des Funktionsabschnitts 28 ergeben sich an den freien radialen Enden jeweils eine Verspanninnenfläche 42 des Verspannabschnitts 26 und eine Funktionsaußenfläche 44 des Funktionsabschnitts 28. Der Abstand zwischen der Verspanninnenfläche 42 und der Funktionsaußenfläche 44 bildet die Ausnehmungsstärke 46 der Ausnehmung 34, welche senkrecht zur Stellachse 18 gemessen wird. Die Ausnehmungsstärke 46 ist größer als 5 mm, insbesondere größer als 7 mm, vorzugsweise größer als 10 mm, und/oder kleiner als 20 mm, insbesondere kleiner als 17 mm, vorzugsweise kleiner als 15 mm, ausgebildet. Die Ausnehmungsstärke 46 ist vorzugsweise derart ausgebildet, dass bei im Betrieb üblicher Verformung des Verspannabschnitts 26 und/oder des Funktionsabschnitts 28 Material in die Ausnehmung 34 verdrängt werden kann, ohne dass es zu Kontakt zwischen dem statisch belasteten Verspannabschnitt 26 und dem dynamisch belasteten Funktionsabschnitt 28 kommt.

Ferner weist die Antriebsstange 20 entlang ihres Umfangs eine parallel zur Stellachse 18 verlaufende Antriebsstangenaußenfläche 48 auf. Zudem weist das Ventilkörper 12 eine parallel zur Stellachse 18 verlaufende Ventilkörperinnenfläche 50 und/oder das Antriebsgehäuse 22 weist eine parallel zur Stellachse 18 verlaufende Antriebsgehäuseinnenfläche 52 auf. Vorzugsweise ist die Ausnehmungsstärke 46 kleiner oder gleich dem in Bezug auf die Stellachse 18 radialen Abstand zwischen einer Druckstückaußenfläche 49 des Druckstücks 47 und der Ventilkörperinnenfläche 50 und/oder zwischen der Antriebsstangenaußenfläche 48 und der Antriebsgehäuseinnenfläche 52. Alternativ ist die Ausnehmungsstärke 46 kleiner oder gleich dem in Bezug auf die Stellachse 18 radialen Abstand zwischen der Antriebsstangenaußenfläche 48 und der Ventilkörperinnenfläche 50 und/oder zwischen der Antriebsstangenaußenfläche 48 und der Antriebsgehäuseinnenfläche 52.

Die zweite Membranlage 32 kann vorzugsweise im Verspannabschnitt 26 aus einem ersten EPDM, im Dichtabschnitt 36 aus FKM und in den Walkabschnitten 38 aus einem zweiten EPDM hergestellt sein.

### Bezugszeichenliste

- 10: Membranventil
- 12: Ventilkörper
- 14: Durchgangsleitung
- 16: Ventilmembran
- 18: Stellachse
- 20: Antriebsstange
- 22: Antriebsgehäuse
- 23: Antrieb
- 24: Ventilsitz
- 26: Verspannabschnitt
- 28: Funktionsabschnitt
- 30: erste Membranlage
- 31: Trockenseite der ersten Membranlage
- 32: zweite Membranlage
- 33: Trennabschnitt
- 34: Ausnehmungen
- 36: Dichtabschnitt
- 38: Walkabschnitte
- 40: Verbindungsabschnitte
- 40a: erste Verbindungsabschnitte
- 40b: zweite Verbindungsabschnitte
- 42: Verspanninnenfläche
- 44: Funktionsaußenfläche
- 46: Ausnehmungsstärke
- 47: Druckstück
- 48: Antriebsstangenaußenfläche
- 49: Druckstückaußenfläche
- 50: Ventilkörperinnenfläche
- 52: Antriebsgehäuseinnenfläche
- 54: erster Stegabschnitt
- 56: Durchgangsbohrung
- 58: zweite Stegabschnitte
- 60: Perforation
- 62: Oberflächenstrukturierung
- 64: Materialverjüngung

## Patentansprüche

1. Eine mehrlagige Ventilmembran (16) für ein Membranventil (10), die Ventilmembran (16) umfassend:
- eine medienberührende erste Membranlage (30), und
- eine auf einer Trockenseite (31) der ersten Membranlage (30) angeordnete zweite Membranlage (32), wobei ein äußerer Verspannabschnitt (26) der zweiten Membranlage (32) und ein vom äußeren Verspannabschnitt (26) umgebener Funktionsabschnitt (28) der zweiten Membranlage (32) zumindest abschnittsweise beabstandet zueinander angeordnet sind.

2. Ventilmembran (16) nach Anspruch 1, wobei die zweite Membranlage (32) wenigstens einen zwischen dem Verspannabschnitt (26) und dem Funktionsabschnitt (28) angeordneten Trennabschnitt (33) aufweist.

3. Ventilmembran (16) nach Anspruch 2, wobei der Trennabschnitt als eine zumindest abschnittweise Ausnehmung (34) und/oder eine zumindest abschnittweise Materialschwächung, insbesondere Perforation und/oder Oberflächenstrukturierung und/oder Materialverjüngung, ausgebildet ist.

4. Ventilmembran (16) nach Anspruch 1, 2 oder 3, wobei ein Verspannabschnitt (26) und ein Funktionsabschnitt (28) der ersten Membranlage (30) einteilig ausgebildet sind.

5. Ventilmembran (16) nach einem der vorherigen Ansprüche, wobei der Funktionsabschnitt (28) wenigstens zwei Walkabschnitte (38) und wenigstens einen stegförmigen, die wenigstens zwei Walkabschnitte (38) voneinander trennenden Dichtabschnitt (36) aufweist.

6. Ventilmembran (16) nach einem der vorherigen Ansprüche, wobei wenigstens ein den Verspannabschnitt (26) und den Funktionsabschnitt (28) verbindender erster Verbindungsabschnitt (40a) in Verlängerung der Längserstreckung des Dichtabschnitts (36) vorgesehen ist.

7. Ventilmembran (16) nach einem der vorherigen Ansprüche, wobei in der zweiten Membranlage (30) wenigstens ein den Verspannabschnitt (26) und den Funktionsabschnitt (28) verbindender zweiter Verbindungsabschnitt (40b) vorgesehen ist, wobei die Längserstreckung des zweiten Verbindungsabschnitts (40b) mit der Längserstreckung des Dichtabschnitts (36) einen Winkel größer 0° und kleiner 180°, insbesondere zwischen 60° und 120°, vorzugsweise von 90°, einschließt.

8. Ventilmembran (16) nach Anspruch 5 oder 6, wobei der wenigstens eine erste Verbindungsabschnitt (40a) und/oder der wenigstens eine zweite Verbindungsabschnitt (40b) als Sollbruchstelle ausgebildet ist.

9. Ventilmembran (16) nach einem der vorherigen Ansprüche, wobei der Verspannabschnitt (26) und der Funktionsabschnitt (28) der zweiten Membranlage (32) mittels der ersten Membranlage (30) miteinander verbunden sind.

10. Ventilmembran (16) nach einem der vorherigen Ansprüche, wobei in der zweiten Membranlage (32) eine Ausnehmungsstärke (46) zwischen einer Verspanninnenfläche (42) des Verspannabschnitts (26) und einer Funktionsaußenfläche (44) des Funktionsabschnitts (28) größer als 5 mm, insbesondere größer als 7 mm, vorzugsweise größer als 10 mm, und/oder kleiner als 20 mm, insbesondere kleiner als 17 mm, vorzugsweise kleiner als 15 mm, liegt.

11. Ventilmembran (16) nach einem der vorherigen Ansprüche, wobei in der zweiten Membranlage (32) der Verspannabschnitt (26) aus einem ersten Material, insbesondere EPDM, und der Funktionsabschnitt (28) aus einem vom ersten Material unterschiedlichen zweiten Material, insbesondere FKM, HNBR und/oder EPDM, hergestellt ist.

12. Ventilmembran (16) nach einem der vorherigen Ansprüche, ferner umfassend eine dritte Membranlage, welche auf einer der ersten Membranlage (30) abgewandten Antriebsseite der zweiten Membranlage (32) angeordnet ist, wobei ein Verspannabschnitt (26) und ein Funktionsabschnitt (28) der dritten Membranlage zumindest abschnittsweise beabstandet zueinander angeordnet sind.

13. Membranventil (10) mit einer medienführenden Durchgansleitung (14) und einer Ventilmembran (16) nach einem der vorherigen Ansprüchen zum Öffnen und Schließen der Durchgangsleitung (14).

14. Membranventil (10) nach dem vorherigen Anspruch, wobei der Funktionsabschnitt (28) entlang einer Stellachse (18) zwischen einer Öffnungsstellung und einer Schließstellung verlagerbar ist.

15. Membranventil (10) nach Anspruch 12 oder 13, wobei das Membranventil (10) ein Ventilkörper (12) und ein am Ventilkörper (12) angeordnetes Antriebsgehäuse (22) aufweist, wobei der Verspannabschnitt (26) der ersten Membranlage (30) und/oder der zweiten Membranlage (32) zwischen dem Ventilkörper (12) und dem Antriebsgehäuse (22), insbesondere statisch, verspannt ist.

16. Membranventil (10) nach einem der Ansprüche 12 bis 14, wobei eine Antriebskraft eines Ventilantriebs des Membranventils (10) über eine Antriebsstange (20) und ein Druckstück in die Ventilmembran (16) einleitbar ist, und wobei in der zweiten Membranlage (32) eine Ausnehmungsstärke (46) zwischen einer Verspanninnenfläche (42) des Verspannabschnitts (26) und einer Funktionsaußenfläche (44) des Funktionsabschnitts (28) kleiner oder gleich dem in Bezug auf die Stellachse (18) radialen Abstand einer Ventilkörperinnenfläche (50) des Ventilkörpers (12) und einer Druckstückaußenfläche (49) eines Druckstücks (47) ist.

17. Membranlage (32) für eine mehrlagige Ventilmembran (16) mit einem Verspannabschnitt (26) und einem vom Verspannabschnitt (26) umgebenen Funktionsabschnitt (28), wobei der Verspannabschnitt (26) und der Funktionsabschnitt (28) zumindest abschnittsweise, insbesondere in einem Betriebszustand, beabstandet zueinander angeordnet sind, und wobei wenigstens in einem Vormontagezustand wenigstens ein Verbindungsabschnitt (40) den Verspannabschnitt (26) und den Funktionsabschnitt (28) miteinander verbindet, wobei vorzugsweise der Verbindungsabschnitt (40) im Betriebszustand getrennt ist.

18. Verfahren zum Montieren und/oder Betreiben eines Membranventils (10),
- wobei in einem Vormontagezustand eine Membranlage (32) beim Einsetzen der Membranlage (32) in das Membranventil (10) einteilig ausgebildet ist,
- wobei die Membranlage (32) einen Verspannabschnitt (26) und einem vom Verspannabschnitt (26) umgebenen Funktionsabschnitt (28) aufweist, welche miteinander in dem Vormontagezustand mittels wenigstens eines Verbindungsabschnitts (40) verbunden sind,
- wobei der wenigstens eine Verbindungsabschnitt (40) im Betriebszustand gezielt getrennt wird, sodass die Membranlage im Betriebszustand zweiteilig ausgebildet ist.

19. Verfahren nach Anspruch 15, wobei der wenigstens eine Verbindungsabschnitt (40) durch die ersten, insbesondere die erste, Verlagerungen des Funktionsabschnitts (28) der Membranlage (32) zwischen einer Öffnungsstellung und einer Schließstellung des Membranventils (10) getrennt wird.
